# EUROPÄISCHE PATENTANMELDUNG

(11) **EP 1 557 316 A2**
(43) Veröffentlichungstag der Anmeldung: **27.07.2005**
(21) Anmeldenummer: 04028800.3
(22) Anmeldetag: 04.12.2004
(51) Int. Cl.: B60K 41/22

(54) **Verfahren zum Betrieb eines Antriebsstranges**

(30) Priorität: 23.01.2004 DE 102004003392
(71) Anmelder: PIV Drives GmbH, 61352 Bad Homburg (DE)
(72) Erfinder: Schönnenbeck, Gert, Dr.-Ing., 61267 Neu-Anspach (DE)
(74) Vertreter: Petersen, Frank, Dipl.-Ing.

(57) **Zusammenfassung**

Die Erfindung betrifft ein Verfahren zum Betrieb eines Antriebsstranges, der ein Getriebe aufweist sowie ein Drehmomentmessglied, eine elektronische Steuerung und eine Kupplung. Das Drehmomentmessglied liefert dabei Signale an die elektronische Steuerung, die mit einem im Antriebstrang übertragenen Drehmoment korrespondieren. Wenn die Steuerung bei Auswertung der Signale das Überschreiten eines Grenzwertes ermittelt, wird die Kupplung über ein entsprechendes Betätigungselement geöffnet, um ein den Antriebsstrang schädigendes zu hohes Drehmoment zu vermeiden.

Erfindungsgemäß wird die Steuerung die ihr vom Drehmomentmessglied übertragenen Signale in Bezug auf die Geschwindigkeit des Drehmomentanstieges auswerten oder aber die Ableitung dieser Geschwindigkeit bilden für die Auswertung. Damit kann vermieden werden, dass in dem Zeitraum zwischen Einleitung des Öffnens der Kupplung und dem effektiven Öffnen der Kupplung das über den Antriebsstrang noch übertragene Drehmoment einen Grenzwert überschreitet.

## Beschreibung

Die Erfindung betrifft ein Verfahren zum Betrieb eines Antriebsstranges mit einem Getriebe, einem Drehmomentmessglied, einer elektronischen Steuerung und einer Kupplung.

Antriebsstränge der hier beschriebenen Art werden in verschiedensten Maschinen eingesetzt, beispielsweise auch in landwirtschaftlich genutzten Einheiten aus Traktor und landwirtschaftlich genutzten, mit einer anzutreibenden Vorrichtung versehenem Anhänger. Wesentlich bei solchen Antriebssträngen ist es insbesondere, sie vor Überlastungen zu schützen.

Hierbei ist besonders relevant, dass über das Getriebe, das in dem Antriebsstrang vorhanden ist, nur eine begrenzte Maximalleistung gebracht werden darf, um hier einen dauerhaften Schaden am Getriebe zu verhindern.

Hierfür ist es bekannt, das vom Antriebstrang übertragene Drehmoment z. B. mittels eines Drehmomentmessgliedes zu überwachen und bei einem Anstieg der Leistung mit einer Überschreitung eines Grenzwertes durch eine Steuerung ein Auslösesignal für eine Kupplung zu geben, die daraufhin öffnet und die Leistungsübertragung über den Antriebsstrang beendet, um so das Getriebe vor einem Schaden zu bewahren.

Es hat sich dabei aber herausgestellt, dass sich beispielsweise bei plötzlich auftretenden starken Drehmomentanstiegen, die beispielsweise durch eine abtriebsseitige Blockierung bewirkt werden, die übliche Reaktionszeit der Steuerkette vom Ausgeben des Kupplungslösesignals durch die Steuerung bis zum tatsächlichen Öffnen der Kupplung so lang ist, dass doch noch überhöhte Leistungswerte auf das Getriebe wirken und dieses somit beschädigt wird.

Aufgabe der vorliegenden Erfindung ist es daher, ein Verfahren anzugeben, mit dem eine derartige ungewollte Überlastung insbesondere des Getriebes bzw. des gesamten Antriebsstranges zu vermeiden ist.

Diese Aufgabe wird erfindungsgemäß dadurch gelöst, dass die Steuerung die ihr vom Drehmomentmessglied gelieferten Signale in Bezug auf die Geschwindigkeit des Drehmomentanstieges auswertet und bei Überschreitung eines hiermit korrelierenden Grenzwertes die Kupplung über ein Betätigungselement öffnet.

Die Erfindung hat den Vorteil, dass bei einem Antriebstrang auf diese Weise bereits erheblich schneller eine Öffnung der Kupplung erreicht werden kann. Der Erfindung liegt däbei die Erkenntnis zugrunde, dass ein zu einer Blockade führender Drehmomentanstieg einen überdurchschnittlich schnellen Verlauf hat, so dass bei Auftreten einer ungewöhnlich hohen Drehmomentanstiegsgeschwindigkeit die Kupplung bereits rechtzeitig ausgelöst werden kann und so eine Überlastung des Getriebes zu verhindern ist.

Bei einer weiteren bevorzugten Ausführungsform wird von der Geschwindigkeit des Drehmomentanstieges die Ableitung gebildet und dann erst diese ausgewertet. Auch hier wurde berücksichtigt, dass ein beschleunigter Drehmomentanstieg ein wesentliches Indiz für eine vorliegende Blockierung des Antriebsstranges darstellt, so dass auch über eine Auswertung der Beschleunigung ein Schutz des Antriebsstranges bzw. insbesondere des Getriebes vor Überlastung erreicht werden kann.

In einer weiteren Verbesserung des Verfahrens wird auch der Auslösegrenzwert durch die Steuerung ermittelt in Abhängigkeit der Differenz zwischen dem aktuell übertragenen Drehmoment und einem vorgebbaren maximal übertragbaren Drehmoment.

Dieser Weiterbildung der Erfindung liegt die Erkenntnis zugrunde, dass bei einem großen Abstand zwischen aktuellem Drehmomentniveau und maximal übertragbaren Drehmoment die Zeit, in der ein Drehmoment ansteigen kann bis der kritische Wert erreicht wird, etwas länger ist als bei einem Drehmomentniveau, das nahe der maximalen Drehmomentgrenze liegt. Bei letzterem muss eine Auslösung des Öffnens der Kupplung somit erheblich früher erfolgen als bei ersterem.

Das hier beschriebene Verfahren eignet sich insbesondere bei Antriebssträngen, bei denen es sich bei dem vorgesehenen Getriebe um ein vollhydraulisches stufenlos verstellbares Kegelscheibengetriebe handelt. In diesem Fall wird insbesondere vorgeschlagen, dass das vorgegebene Drehmomentmessglied als Drehmomentfühler ausgebildet ist, der Signale liefert, die direkt korrespondieren mit einem zur Anpressung der Kegelscheiben notwendigen Hydraulikdruck. Bei einer derartigen Vorrichtung ist das hier vorgesehene Verfahren insbesondere deswegen sinnvoll, da bereits der Anstieg des Hydraulikdrucks mit einer gewissen "Reaktionszeit" belastet ist, die beispielsweise höher ist als bei Verwendung einer mit Dehnungsmessstreifen versehenen Messwelle, die alternativ als Drehmomentmessglied zum Einsatz kommen könnte.

Auch besteht die Möglichkeit, anstelle eines Drehmomentfühlers, der direkt auf den Hydraulikdruck in den die Anpressung der Kegelscheiben bewirkenden Zylindern wirkt, einem hydraulischen Fühler zu verwenden, der die Aufgabe hat, drehmomentproportionale Drücke in dem Antriebsstrang zu liefern.

Ein Verfahren wie oben beschrieben wird insbesondere vorgeschlagen zur Verwendung in einem Antriebsstrang einer landwirtschaftlichen Maschine, der eine Leistungsverzweigung aufweist: Bei einer bisher bekannten derartigen Vorrichtung wird das Durchdrehen von Antriebsrädern als Möglichkeit zur Drehmomentbegrenzung genutzt: Die durchdrehenden Antriebsräder fungieren dabei wie eine öffnende Rutschkupplung. Da allerdings der Reibwert zwischen den Antriebsrädern und dem Untergrund von einer Vielzahl von Faktoren abhängig ist, angefangen von der eigentlichen Rutschigkeit des Bodens bis zur Gummizusammensetzung der Antriebsreifen, ist hier keine definierte Auslösung einer Drehmomentbegrenzung möglich und ein Antriebsstrang kann somit bisher nicht sicher geschützt werden.

Weitere Vorteile und Merkmale der Erfindung ergeben sich aus der Beschreibung der nachfolgenden Zeichnungen. Dabei zeigt
- Figur 1: den Messschrieb bei einem normalen Drehmomentanstieg;
- Figur 2: den Messschrieb für einen schnellen Drehmomentanstieg zum Beispiel bei einer Blockierung.

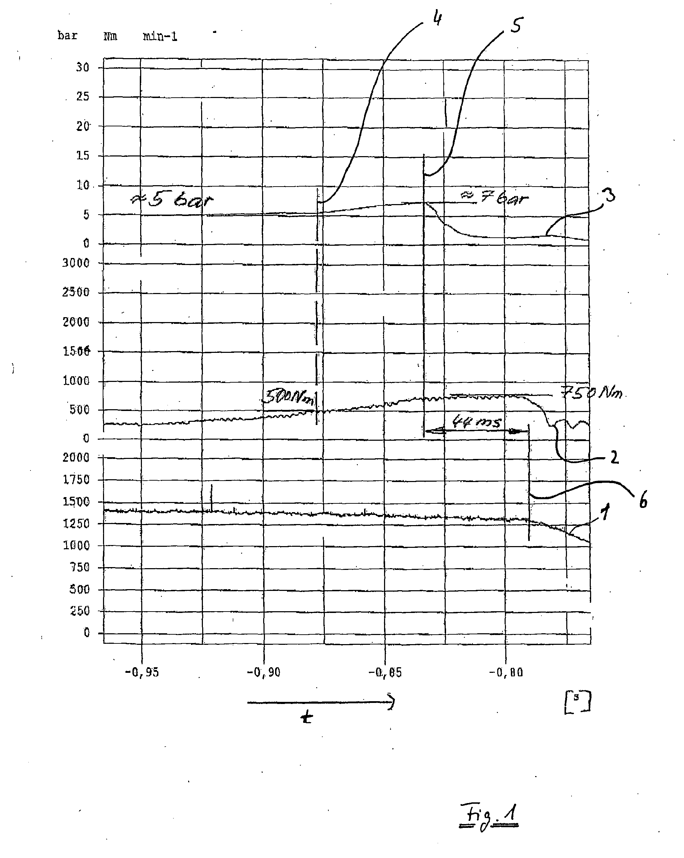

Figur 1 zeigt den Messschrieb für einen Antriebsstrang. Dieser Antriebsstrang ist im hier dargestellten Beispiel lediglich auf einem Prüfstand realisiert. Ansonsten ist ein derartiger Antriebsstrang insbesondere in einer landwirtschaftlichen Maschine eingebaut.

In dem Antriebsstrang ist ein vollhydraulisches Kegelscheibenumschlingungsgetriebe enthalten. Ein derartiges Kegelscheibenumschlingungsgetriebe ist dem Fachmann bekannt und deshalb wird es hier nicht noch einmal separat dargestellt.

Man erkennt auf dem Messschrieb den aufgetragenen Drehzahlverlauf 1, den darüber aufgetragenen Drehmomentverlauf 2 und als oberstes den aufgezeichneten Verlauf des Anpressdruckes 3 für das vorgesehene vollhydraulische Kegelscheibengetriebe. Mit diesem Anpressdruck werden die Kegelscheiben zusammengedrückt, um ein Durchrutschen des zwischen ihnen umlaufenden Übertragungsmittels zu verhindern..Es ist dabei bekannt, diesen Anpressdruck abhängig vom zu übertragenden Drehmoment zu regeln. Hierzu werden selbsttätig reagierende Drehmomentfühler in die Hydraulik des Kegelscheibenumschlingungsgetriebes integriert.

Man erkennt in der Figur 1, dass bei etwa gleich bleibender Drehzahl 1 von ca. 1.350 min⁻¹ das Drehmoment in dem Antriebsstrang kontinuierlich ansteigt von etwa 250 Nm bis 500 Nm und darüber hinaus.

Der in der Linie 3 dargestellte Anpressdruck für das vollhydraulische Kegel-scheibenumschlingungsgetriebe steigt dabei von etwa 5 bar auf 5,5 bar an.

Wenn ein Drehmoment von im hier dargestellten Beispiel etwa 500 Nm erreicht ist, wird ein interner Vorgang in Gang gesetzt, mit dem eine Kupplung innerhalb des Antriebsstranges geöffnet wird, um diesen vor zu hohen Drehmomenten zu schützen.

Man erkennt, dass vom Erreichen des eingestellten Drehmomentgrenzwertes von 500 Nm bei dem zu den mit der Linie 4 gekennzeichneten Zeitpunkt bis zu dem Zeitpunkt, der durch die Linie 5 gekennzeichnet ist, noch etwa 50 ms vergehen, bis die Kupplung anfängt zu öffnen. Bis zu diesem Zeitpunkt kann aber das Drehmoment, wie an der Linie 2 zu erkennen ist, weiter ansteigen auf einen Wert von ca. 750 Nm, während gleichzeitig der Anpressdruck für das Kegelscheibenumschlingungsgetriebe auf einen Druck von 7 bar ansteigt.

Während dann zum Zeitpunkt, der der Linie 5 entspricht, die im Antriebsstrang vorhandene Kupplung beginnt zu öffnen und damit auch der hier notwendige Anpressdruck für die Kegelscheiben des Kegelscheibenumschlingungsgetriebes abfällt, bleibt das Drehmoment auf einem Niveau von etwa 750 Nm, bis zu einem noch einmal 44 ms liegenden späteren Zeitpunkt (Linie 6) die Kupplung vollständig geöffnet ist und dann auch die Drehzahl (Linie 1) beginnt abzufallen.

Es ist bereits in diesem Messschrieb deutlich zu erkennen, dass von der Initiierung der Kupplungsöffnung bis zur geöffneten Kupplung einer gewisser Zeitraum verstreicht, innerhalb dessen das Drehmoment weiter ansteigen kann und damit auch ein Anpressdruck für Kegelscheiben in einem im Antriebsstrang vorgesehenen Kegelscheibenumschlingungsgetriebe.

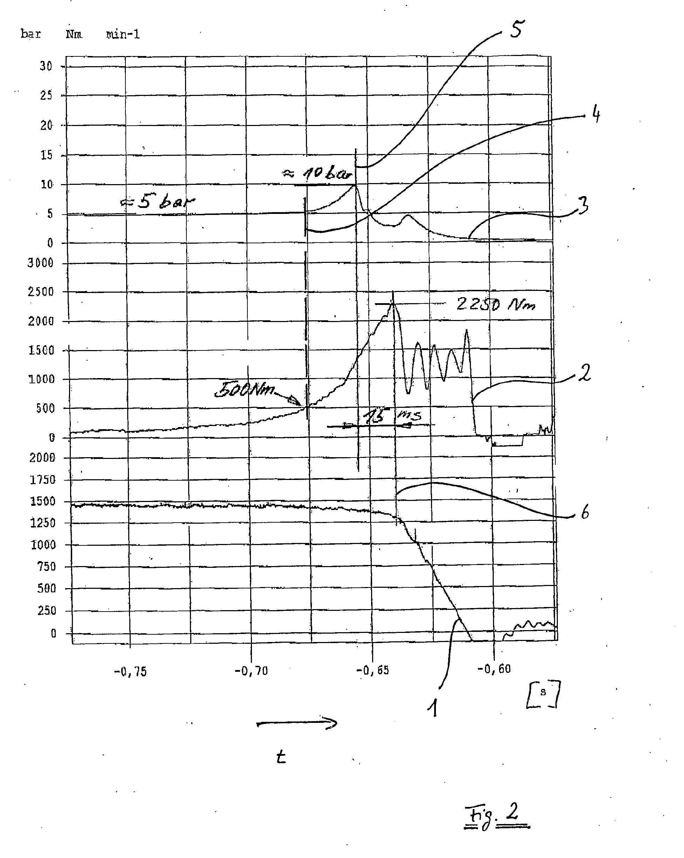

In der Figur 2 ist der Messschrieb eines schnelleren Drehmomentanstieges dargestellt. Gleiche Elemente sind mit gleichen Bezugszeichen versehen.

Man erkennt wieder, dass das Getriebe mit einer Drehzahl von etwa 1.450 min⁻¹ läuft (Drehzahlverlauf 1). Dabei steigt das Drehmoment langsam an von einem Wert von ca. 75 Nm auf 500 Nm (Drehmomentverlauflinie 2).

Der Anpressdruck, der dabei im vollhydraulischen Kegelscheibenumschlingungsgetriebe herrscht (Linie 3), beträgt dabei ca. 5 bar.

Zum Zeitpunkt des Erreichens des Drehmomentes von 500 Nm (Linie 4) werden wiederum die internen Vorgänge in Gang gesetzt, um ein Öffnen der im Antriebsstrang vorgesehenen Kupplung zu erreichen. Obwohl im hier dargestellten Beispiel gemäß der Figur 2 der Zeitraum bis zum ersten Wirksamwerden des Kupplungsöffnens (Linie 5) nur ca. 20 ms später liegt als der Zeitpunkt des Erreichens des Grenzdrehmomentes von 500 Nm, kann man in der Figur 2 erkennen, dass das Drehmoment erheblich weiter zunimmt (ca. 1.300 Nm bei Linie 5) wobei der Anpressdruck im Kegelscheibenumschlingungsgetriebe gleichzeitig auf ca. 10 bar ansteigt (Vergleiche Linie 3).

Obwohl dann (Zeitpunkt Linie 5) die Kupplung beginnt zu öffnen und damit der Anpressdruck (Linie 3) für das Kegelscheibenumschlingungsgetriebe abfällt, vergeht noch eine weitere Zeit von ca. 15 ms, bis die Kupplung tatsächlich öffnet (Zeitpunkt Linie 6). Bis zu diesem Zeitpunkt ist aber das über den Antriebsstrang verlaufende Drehmoment bereits auf einen Maximalwert von 2.250 Nm angestiegen. Setzt man voraus, dass der gleiche Antriebsstrang vorliegt, wie er bei der Figur 1 vorgelegen hat, der für ein maximales Drehmoment von ca. 800 Nm ausgelegt war, erkennt man, dass der Antriebsstrang gemäß Figur 2 mit größter Sicherheit Schäden davonträgt aufgrund des fast dreimal so hohen über den Antriebsstrang geleiteten Drehmomentes.

Bei der Erfindung wird jetzt der Drehmomentverlauf gemäß den Linien 2 kontinuierlich überwacht und ausgewertet. Dies erfolgt über einen Mikroprozessor, der den Gradienten oder dessen Ableitung der Drehmomentkurve beurteilt. Damit wird sichergestellt, dass die Auslösung der internen Vorgänge bereits so rechtzeitig erfolgen kann, dass der Maximalwert des Drehmomentes, das über einen Antriebsstrang geleitet wird, auch während des Zeitraumes zwischen Einfettung der internen Vorgänge und dem Öffnen der Kupplung nicht den vorgegebenen Maximalwert überschreiten wird.

Die hierzu notwendigen Schritte innerhalb eines Mikroprozessors kann ein Fachmann ohne weiteres unter Heranziehung seines Fachwissens auslegen. Unter diesem Aspekt wird auf eine weitere Erläuterung hier verzichtet.

## Patentansprüche

1. Verfahren zum Betrieb eines Antriebstranges mit einem Getriebe, einem Drehmomentmessglied, einer elektronischen Steuerung und einer Kupplung, wobei dem Drehmomentmessglied Signale an die elektronische Steuerung liefert, die mit einem im Antriebstrang übertragenen Drehmoment korrespondieren und wobei die Steuerung die Signale auswertet und bei Überschreitung eines Grenzwertes die Kupplung über ein Betätigungselement öffnet,
**dadurch gekennzeichnet,**
**dass** die Steuerung die Signale in Bezug auf die Geschwindigkeit des Drehmomentanstieges auswertet.

2. Verfahren gemäß Anspruch 1,
**dadurch gekennzeichnet,**
**dass** die Ableitung der Geschwindigkeit des Drehmomentanstieges ausgewertet wird.

3. Verfahren gemäß Anspruch 1,
**dadurch gekennzeichnet,**
**dass** der Grenzwert ermittelt wird unter Berücksichtigung der Differenz zwischen dem aktuell übertragenen Drehmoment und einem vorgebbaren maximal übertragbaren Drehmoment.

4. Verfahren gemäß Anspruch 1,
**dadurch gekennzeichnet,**
**dass** das Getriebe ein vollhydraulisches stufenlos verstellbares Kegelscheibengetriebe ist und dass das Drehmomentmessglied ein Drehmomentfühler ist, der Signale liefert, die korrespondieren zu einem zur Anpressung der Kegelscheiben notwendigen Hydraulikdruck.

5. Verfahren gemäß Anspruch 1,
**dadurch gekennzeichnet,**
**dass** das Getriebe in einem Antriebstrang eine landwirtschaftliche Maschine ist.
